# FASCICULE DE BREVET EUROPEEN

(11) **EP 3 491 438 B1**
(45) Date de publication et mention de la délivrance du brevet: **14.10.2020**
(21) Numéro de dépôt: 17758232.7
(22) Date de dépôt: 31.07.2017
(51) Int. Cl.: G02B 6/30, G02B 6/34, G02B 6/12, G02B 6/43

(54) **COUPLEUR OPTIQUE MULTI-SPECTRAL À FAIBLES PERTES EN RÉCEPTION**
MULTISPEKTRALER OPTISCHER KOPPLER MIT NIEDRIGEN EMPFANGSVERLUSTEN
MULTI-SPECTRAL OPTICAL COUPLER WITH LOW RECEIVE LOSSES

(30) Priorité: 01.08.2016 FR 1657450
(43) Date de publication de la demande: 05.06.2019
(73) Titulaire: Commissariat à l'Énergie Atomique et aux Énergies Alternatives, 75015 Paris (FR)
(72) Inventeur: PLANTIER, Simon, 38000 Grenoble (FR); CASALE, Marco, 38000 Grenoble (FR); FOWLER, Daivid, 38950 Saint Martin le Vinoux (FR); KOPP, Christophe, 38120 Fontanil-Cornillon (FR)
(74) Mandataire: Brevalex
(86) Numéro de dépôt international: PCT/FR2017/052149
(87) Numéro de publication internationale: WO 2018/024975

(56) Documents cités:
- FR-A1- 2 922 031
- US-A- 5 664 032

## Description

### DOMAINE TECHNIQUE

Le domaine de l'invention est celui des circuits photoniques intégrés, destinés à être couplés à une ou plusieurs fibres optiques.

L'invention concerne plus particulièrement un coupleur optique à réseau, pour réaliser un couplage optique entre la ou les fibre(s) optique(s), et lesdits circuits photoniques. Le coupleur optique à réseau est intégré, avec les circuits photoniques, sur un même substrat.

L'invention s'applique notamment au secteur des télécommunications optiques et aux réseaux (en anglais « network ») de transmission de données.

### ÉTAT DE LA TECHNIQUE ANTÉRIEURE

On connaît dans l'art antérieur de nombreuses réalisations d'un coupleur optique à réseau.

On s'intéresse ici plus particulièrement à des coupleurs optiques adaptés au couplage de plusieurs portions de spectre.

On connaît à cet effet un coupleur optique à réseau, comprenant un unique réseau de diffraction, constitué de trous répartis selon deux dimensions de l'espace.

Selon une première dimension, les trous du réseau sont espacés régulièrement, selon un pas Λ*ₓ*.

Selon une deuxième dimension, les trous du réseau sont espacés régulièrement, selon un pas Λ*_{y}* différent de Λ*ₓ*.

A chaque pas Λ*ₓ* ou Λ*_{y}* correspond une longueur d'onde centrale de couplage *λₓ*, respectivement λ*_{y}*.

Le réseau de diffraction présente une forme de carré.

Sur un premier côté du carré, s'étend un guide d'onde configuré pour guider un signal à la longueur d'onde *λₓ*.

Sur un deuxième côté du carré, s'étend un guide d'onde configuré pour guider un signal à la longueur d'onde λ*_{y}*.

Le coupleur optique réalise ainsi un couplage optique du mode TE à la longueur d'onde λ*ₓ,* et du mode TE à la longueur d'onde *λ_{y}*.

On rappelle que par convention, sur un circuit optique formé dans un plan donné, on appelle :
- mode transverse électrique, ou mode TE, un mode de propagation tel que le champ électrique est orthogonal à la direction de propagation et parallèle au plan du circuit, le mode TE correspondant à un premier état fondamental de polarisation ;
- mode transverse magnétique, ou mode TM, un mode de propagation tel que le champ électrique est orthogonal au plan du circuit, le mode TM correspondant à un second état fondamental de polarisation.

Un tel coupleur optique est décrit par exemple dans l'article « Bi-wavelength two dimensional chirped grating couplers for low cost WDM PON transceivers », Lin Xu & al., Optics Communications 284 (2011) 2242-2244.

Un tel coupleur optique est sensible à la polarisation, puisque pour chaque longueur d'onde, il ne traite qu'une seule des deux polarisations.

Un tel coupleur optique est destiné à coupler optiquement une fibre optique, et des circuits photoniques intégrés sur un substrat.

Il ne peut donc fonctionner correctement que dans des conditions très strictes. En particulier, il ne peut transférer correctement un signal de la fibre optique vers les circuits photoniques, que si la polarisation de ce signal est contrôlée (par exemple par le biais d'une fibre à maintien de polarisation, ou d'une fibre optique classique utilisée avec un contrôleur de polarisation).

Or, dans les réseaux de transmission de données couramment utilisés en pratique, notamment dans le secteur des télécommunications, la polarisation du signal n'est pas contrôlée. En d'autres termes, l'état de polarisation d'un signal à transférer d'une fibre optique vers des circuits photoniques, est inconnu et/ou instable (variable).

Un objectif de la présente invention est donc de proposer un coupleur optique adapté à coupler différentes longueurs d'onde, et ne présentant pas les inconvénients de l'art antérieur.

En particulier, il s'agit de proposer un coupleur optique adapté à coupler différentes longueurs d'onde, offrant de bonnes performances, même pour le transfert, d'une fibre optique vers des circuits photoniques, d'un signal dont l'état de polarisation est inconnu et/ou instable.

Les publications FR 2 922 031 A1 et US 5 664 032 A décrivent des dispositifs de couplage optique particulièrement intéressants.

### EXPOSÉ DE L'INVENTION

Cet objectif est atteint avec un dispositif de couplage optique, destiné à réaliser un couplage optique à au moins deux longueurs d'onde centrales entre une fibre optique et des circuits photoniques.

Selon l'invention, le dispositif de couplage optique comprend un substrat et au moins deux étages de couplage intégrés sur ledit substrat, et :
- chaque étage de couplage comprend, intégrés sur le substrat, un réseau de couplage et au moins un guide d'onde, le réseau de couplage étant disposé en entrée ou en sortie de l'au moins un guide d'onde et configuré pour mettre en œuvre un couplage optique centré sur une longueur d'onde centrale respective ;
- les plusieurs réseaux de couplage sont superposés les uns aux autres ;
- l'un au moins des réseaux de couplage est un réseau de couplage insensible à la polarisation.

Les plusieurs réseaux de couplage sont intégrés sur le substrat. En d'autres termes, ils s'étendent chacun au-dessus du substrat, dans des plans parallèles aux plans du substrat, notamment parallèles au plan de la surface supérieure du substrat. Dit encore autrement, les plans selon lesquels s'étendent les réseaux de couplage sont orthogonaux à une droite normale au substrat.

Dans tout le texte, le terme « dessus » se rapporte à un axe vertical, orthogonal au plan du substrat.

Les plusieurs réseaux de couplage sont superposés les uns au-dessus des autres. En d'autres termes, les plusieurs réseaux de couplage sont superposés selon une droite normale au substrat, notamment une droite normale à la surface supérieure du substrat.

De préférence, les centres des réseaux de couplage sont alignés selon une droite normale au substrat, notamment une droite normale à la surface supérieure du substrat.

Chaque réseau de couplage insensible à la polarisation est donc disposé en entrée ou en sortie d'un ou deux guides d'onde, dédiés ensemble au guidage des deux polarisations d'un signal circulant dans la fibre optique, en particulier un signal arrivant de la fibre optique.

Chaque réseau de couplage insensible à la polarisation peut être disposé plus particulièrement en entrée ou en sortie de deux guides d'onde, ou en entrée ou en sortie d'un unique guide d'onde multimode.

En particulier, chaque réseau de couplage insensible à la polarisation peut être disposé en entrée ou en sortie de deux guides d'onde, de préférence des guides d'onde monomode, chaque guide d'onde étant dédié au guidage d'une polarisation différente d'un signal circulant dans la fibre optique, en particulier un signal arrivant de la fibre optique. Il s'agit de préférence de deux guides d'onde TE (adaptés au guidage du mode TE d'un signal dans le guide d'onde). Il peut également s'agir de deux guides d'onde TM (adaptés au guidage du mode TM d'un signal dans le guide d'onde). Il peut également s'agir d'un guide d'onde TE et un guide d'onde TM, en particulier lorsque le réseau insensible à la polarisation n'est pas un réseau présentant une périodicité d'ordre deux. On remarque que l'état de polarisation dans le guide d'onde ne correspond pas forcément à l'état polarisation dans la fibre optique. Les deux guides d'onde peuvent guider chacun un même type de polarisation (TE, respectivement TM), correspondant au guidage des deux polarisations d'un signal considéré au niveau de la fibre optique.

En variante, chaque réseau de couplage insensible à la polarisation peut être disposé en entrée ou en sortie d'un unique guide d'onde multimode.

En fonctionnement, on dispose une ou plusieurs fibre(s) optique(s) au-dessus de l'empilement de réseaux. Il est donc implicite que l'axe de chaque fibre optique n'est pas parallèle aux plans du substrat et des réseaux de couplage. On considère ici, plus particulièrement, une extrémité d'injection de chaque fibre optique.

De préférence, une unique fibre optique est disposée au-dessus de l'empilement de réseaux.

La ou les fibre(s) optique(s) véhicule(nt) un signal optique, ou plusieurs signaux optiques, correspondant à plusieurs portions de spectre centrées chacune sur une longueur d'onde centrale donnée.

L'idée à la base de l'invention est de superposer différents étages de couplage, dédiés chacun à l'une desdites portions de spectre.

Chaque réseau de couplage est donc agencé pour réaliser un couplage optique d'une seule de ces portions de spectre, c'est-à-dire un couplage optique à une unique longueur d'onde centrale.

Ainsi, chaque réseau de couplage peut être un réseau de couplage standard, présentant des propriétés de couplage optimales, notamment un faible taux de pertes. Par exemple, chaque réseau de couplage peut être constitué de matériaux standards comme le silicium et le dioxyde de silicium.

On utilise pour au moins l'un des étages, un réseau de couplage insensible à la polarisation. Un tel réseau de couplage est adapté à coupler, pour une longueur d'onde centrale prédéterminée, une première polarisation dans une première voie et une seconde polarisation dans une seconde voie. Chaque voie correspond à un guide d'onde intégré sur le substrat, à hauteur du réseau de couplage. Pour ladite longueur d'onde centrale prédéterminée, le dispositif de couplage optique offre donc de bonnes performances, même pour le transfert, d'une fibre optique vers des circuits photoniques, d'un signal dont l'état de polarisation est inconnu et/ou instable.

On réalise ainsi un dispositif de couplage optique adapté à coupler différentes longueurs d'onde centrales, et offrant, pour l'une ou plusieurs de ces longueurs d'onde centrales, de bonnes performances même pour le transfert, d'une fibre optique vers des circuits photoniques, d'un signal dont l'état de polarisation est inconnu et/ou instable. En particulier, le dispositif de couplage optique offre de bonnes performances, même avec des fibres optiques autres que des fibres optiques à maintien de polarisation, et sans avoir recours à des dispositifs annexes de contrôle de polarisation.

En outre, la géométrie en empilement, avec chaque étage dédié à une unique longueur d'onde centrale, simplifie également l'agencement des circuits photoniques reliés au dispositif de couplage optique selon l'invention. Les circuits photoniques peuvent notamment être agencés également en une pluralité d'étages, chaque étage étant dédié à une unique longueur d'onde centrale.

L'invention offre une grande modularité dans le choix des longueurs d'onde centrales pouvant être couplées par le dispositif optique de couplage, les différents étages de couplage étant indépendant les uns des autres.

En outre, le nombre de longueurs d'onde centrales pouvant être couplées n'est pas limité, puisqu'on peut superposer autant d'étages de couplage que souhaité.

L'invention offre donc une excellente modularité du spectre de transmission du dispositif de couplage optique.

L'invention permet d'augmenter la compacité des circuits photoniques, notamment nano-photoniques, en offrant une large plage de fonctionnement en longueur d'onde, et conserve une structure de couplage verticale avantageuse (fibre optique au-dessus).

La plage de fonctionnement en longueur d'onde peut être formée d'un seul tenant, ou constituée de plusieurs portions discrètes. Le dispositif peut former en particulier un coupleur large bande, où chaque portion de spectre est couplée par un étage de couplage, ou un coupleur émetteur-récepteur, où les spectres d'émission et de réception sont couplés chacun par un étage de couplage respectif.

De préférence, le dispositif selon l'invention comprend en outre une couche intercalaire dite initiale et/ou au moins une couche intercalaire dite intermédiaire, la couche intercalaire initiale s'étendant entre le substrat et un étage de couplage directement voisin, et chaque couche intercalaire intermédiaire s'étendant entre deux étages de couplage.

Chaque couche intercalaire peut présenter une épaisseur supérieure à 300 nm.

Chaque couche intercalaire est avantageusement en silice.

Avantageusement, l'étage de couplage le plus proche du substrat présente un réseau de couplage apodisé, et l'étage de couplage le plus éloigné du substrat présente un réseau de couplage non apodisé.

De préférence, chaque étage de couplage est associé à un maximum respectif du taux de transmission du couplage optique mis en œuvre par le réseau de couplage correspondant, et pour au moins un couple de deux étages de couplage, la différence entre les maxima respectifs correspondant est inférieure à 1 dB.

Selon un premier mode de réalisation, le dispositif selon l'invention comprend deux étages de couplage parmi lesquels :
- un premier étage de couplage, recevant un premier réseau de couplage insensible à la polarisation, associé à une première longueur d'onde centrale et à un premier maximum du taux de transmission du couplage optique mis en œuvre par ledit réseau de couplage ; et
- un deuxième étage de couplage, recevant un deuxième réseau de couplage insensible à la polarisation, associé à une deuxième longueur d'onde centrale et à un deuxième maximum du taux de transmission du couplage optique mis en œuvre par ledit réseau de couplage ;
la différence entre la première et la deuxième longueurs d'onde centrales étant inférieure ou égale à 100 nm, et la différence entre le premier et le deuxième maximum du taux de transmission étant inférieure ou égale à 1 dB, le dispositif de couplage optique formant ainsi un coupleur large bande insensible à la polarisation avec une bande passante à -1 dB supérieure ou égale à 50 nm.

Selon un deuxième mode de réalisation, le dispositif selon l'invention comprend deux étages de couplage parmi lesquels :
- un premier étage de couplage, recevant un premier réseau de couplage insensible à la polarisation, et associé à une première longueur d'onde centrale ; et
- un deuxième étage de couplage, recevant un deuxième réseau de couplage sensible à la polarisation, et associé à une deuxième longueur d'onde centrale ;
la différence entre la première et la deuxième longueurs d'onde centrales étant supérieure ou égale à 130 nm.

De préférence, la première longueur d'onde centrale est comprise entre 1540 et 1560 nm, et la deuxième longueur d'onde centrale est comprise entre 1300 et 1320 nm.

Le nombre d'étages de couplage est avantageusement égal à deux.

L'invention concerne également un système optique comprenant, intégrés sur un même substrat, un dispositif de couplage optique selon l'invention et des circuits photoniques, dans lequel les circuits photoniques sont agencés en une pluralité d'étages de traitement superposés, et dans lequel à chaque étage de couplage du dispositif de couplage optique correspond un étage de traitement.

Le système selon l'invention peut être un système dans lequel le dispositif de couplage optique est un dispositif selon le premier mode de réalisation de l'invention, et dans lequel :
- le premier étage de couplage est disposé en entrée d'un premier étage de traitement, configuré pour le traitement d'un signal centré sur la première longueur d'onde centrale et reçu par le système par l'intermédiaire du dispositif de couplage optique ; et
- le deuxième étage de couplage est disposé en entrée d'un deuxième étage de traitement, configuré pour le traitement d'un signal centré sur la deuxième longueur d'onde centrale et reçu par le système par l'intermédiaire du dispositif de couplage optique.

Un tel système peut comprendre en outre une unique fibre d'émission et réception, configurée pour transmettre aux circuits photoniques, par l'intermédiaire du dispositif de couplage optique, un signal large bande formé par le signal centré sur la première longueur d'onde centrale et le signal centré sur la deuxième longueur d'onde centrale.

En variante, le système selon l'invention peut être un système dans lequel le dispositif de couplage optique est un dispositif selon le deuxième mode de réalisation de l'invention, et dans lequel :
- le premier étage de couplage est disposé en entrée d'un premier étage de traitement, configuré pour le traitement d'un signal centré sur la première longueur d'onde centrale et reçu par le système par l'intermédiaire du dispositif de couplage optique ; et
- le deuxième étage de couplage est disposé en sortie d'un deuxième étage de traitement, configuré pour le traitement d'un signal centré sur la deuxième longueur d'onde centrale et destiné à être émis par le système par l'intermédiaire du dispositif de couplage optique.

Un tel système peut comprendre en outre une unique fibre d'émission et réception, configurée :
- pour transmettre au premier étage de traitement, par l'intermédiaire du dispositif de couplage optique, le signal centré sur la première longueur d'onde centrale ; et
- pour recevoir du deuxième étage de traitement, par l'intermédiaire du dispositif de couplage optique, le signal centré sur la deuxième longueur d'onde centrale.

### BRÈVE DESCRIPTION DES DESSINS

La présente invention sera mieux comprise à la lecture de la description d'exemples de réalisation donnés à titre purement indicatif et nullement limitatif, en faisant référence aux dessins annexés sur lesquels :
- les figures 1A à 1C illustrent un premier mode de réalisation d'un dispositif de couplage optique selon l'invention ;
- la figure 2 illustre un système comprenant le dispositif de couplage optique selon le premier mode de réalisation de l'invention, et des circuits photoniques de traitement de signal ;
- la figure 3 illustre un taux de transmission en fonction de la longueur d'onde, dans un dispositif de couplage optique selon le premier mode de réalisation de l'invention ;
- les figures 4A à 4C illustrent un deuxième mode de réalisation d'un dispositif de couplage optique selon l'invention ;
- la figure 5 illustre un système comprenant le dispositif de couplage optique selon le deuxième mode de réalisation de l'invention, et des circuits photoniques de traitement de signal ; et
- la figure 6 illustre un taux de transmission en fonction de la longueur d'onde, dans un dispositif de couplage optique du type de celui selon le deuxième mode de réalisation de l'invention.

### EXPOSÉ DÉTAILLÉ DE MODES DE RÉALISATION PARTICULIERS

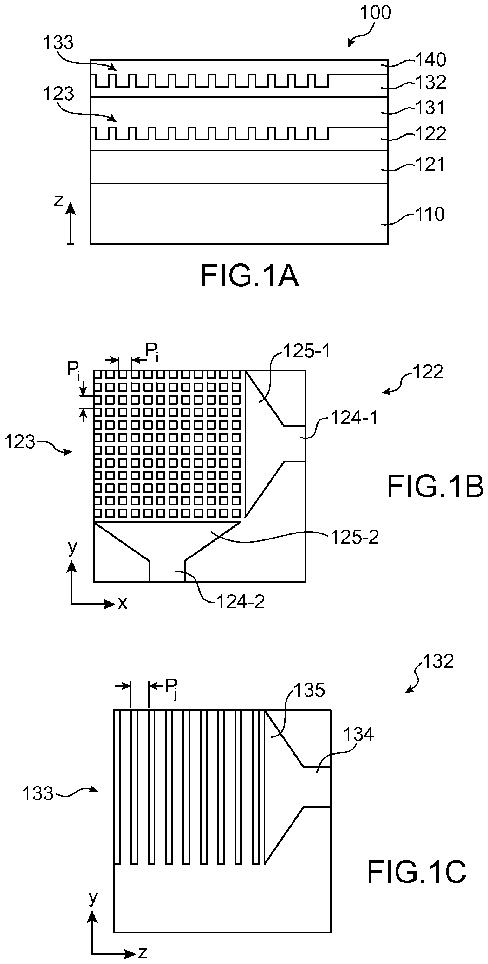

On décrit tout d'abord, en référence aux figures 1A à 1C, un premier mode de réalisation d'un dispositif de couplage optique 100 selon l'invention.

En figure 1A, le dispositif de couplage optique 100 est représenté selon une vue en coupe.

Le dispositif de couplage optique 100 comprend ici, superposés directement les uns au-dessus des autres :
- un substrat 110, notamment un substrat en silicium ;
- une première couche dite intercalaire 121, constituée ici de silice (SiO₂), disposée directement sur le substrat ;
- une première couche de couplage 122, disposée directement sur la première couche intercalaire 121, et dans laquelle est gravé un premier réseau de diffraction 123, dit premier réseau de couplage ;
- une deuxième couche dite intercalaire 131, constituée ici de silice (SiO₂), disposée directement sur la première couche de couplage 122 ;
- une deuxième couche de couplage 132, disposée directement sur la deuxième couche intercalaire 131, et dans laquelle est gravé un deuxième réseau de diffraction 133, dit deuxième réseau de couplage ; et le cas échéant
- une couche d'encapsulation 140, recouvrant directement la deuxième couche de couplage 132.

Toutes les couches de couplage 122, 132 peuvent être constituées du même matériau, par exemple silicium, ou du nitrure de silicium (SiₓN_{y} ou SiₓN :H).

En variante, toutes les couches de couches de couplage ne sont pas constituées du même matériau, l'une pouvant être en silicium, et l'autre en nitrure de silicium, par exemple.

Chaque couche de couplage 122, respectivement 132, est gravée pour former des renfoncements. Ces renfoncements sont remplis par le matériau de la couche recouvrant directement ladite couche de couplage, ici le matériau de la deuxième couche intercalaire 131, respectivement la couche d'encapsulation 140.

Dans chaque couche de couplage 122, respectivement 132, la gravure forme le réseau de couplage 123, respectivement 133, et au moins un guide d'onde en entrée/sortie de ce réseau.

Ici, chaque couche de couplage 122, respectivement 132, présente une épaisseur de 300 nm, avec une profondeur de gravure de 150 nm. Cet exemple n'est pas limitatif.

On nomme « étage de couplage », la couche de couplage 122, respectivement 132, dont les renfoncements gravés sont remplis par le matériau de la couche située au-dessus. Chaque couche de couplage 122, respectivement 132, reçoit un réseau de couplage et au moins un guide d'onde.

Ces étages de couplage 122 et 132 sont tous deux intégrés sur le substrat 110, c'est-à-dire formés dans une ou plusieurs couche(s) de matériau(x) déposée(s) sur le substrat.

Les étages de couplage sont superposés l'un au-dessus de l'autre, séparés ici par la couche intercalaire 131, nommée « couche intercalaire intermédiaire ». Chaque couche intercalaire intermédiaire s'étend de préférence directement entre deux étages de couplage.

La couche intercalaire 121 qui sépare le substrat et le premier étage de couplage est nommée plus particulièrement « couche intercalaire initiale ». La couche intercalaire initiale 121 s'étend de préférence directement entre le substrat et le premier étage de couplage.

Les réseaux de couplage 123 et 133 sont alignés l'un au-dessus de l'autre. En particulier, les réseaux de couplage présentent avantageusement la même longueur et la même largeur, et sont alignés ensemble selon l'axe de la hauteur (z).

La figure 1B illustre, selon une vue de dessus, la première couche de couplage 122.

Cette couche comporte le réseau de couplage 123, configuré pour mettre en œuvre le couplage optique d'un signal centré sur une première longueur d'onde centrale.

Le réseau de couplage 123 est ici un réseau de couplage insensible à la polarisation.

Il est constitué ici d'une série de motifs répartis selon un maillage carré, c'est-à-dire avec une périodicité d'ordre deux, et selon un pas de répartition Pᵢ identique selon les deux dimensions du plan.

Les motifs sont ici des trous dans la première couche de couplage 122 (remplis par le matériau de la couche intercalaire 131).

Les trous présentent ici chacun une section carrée.

Cette forme des trous n'est pas limitative, et de nombreuses autres formes peuvent être mises en œuvre sans sortir du cadre de l'invention, par exemple des trous de section circulaire.

Le réseau de couplage 123 présente avantageusement une forme rectangulaire ou carrée, ici une forme carrée.

Un premier guide d'onde 124-1 s'étend orthogonal à l'un des côtés de ce carré, à mi-hauteur le long de ce côté du carré.

Un second guide d'onde 124-2 s'étend orthogonal à un autre des côtés du carré, à mi-hauteur le long de cet autre côté du carré, et orthogonal au premier guide d'onde 124-1.

Un adaptateur 125-1, respectivement 125-2, nommé couramment « taper », s'étend entre le réseau de couplage 123 et une extrémité du guide d'onde 124-1, respectivement 124-2.

L'adaptateur 125-1, respectivement 125-2, présente une largeur qui décroît progressivement depuis son côté adjacent au réseau de couplage 123 jusqu'à son côté adjacent au guide d'onde 124-1, respectivement 124-2.

Le réseau 123, les guides d'onde 124-1, 124-2 et les adaptateurs 125-1, 125-2 sont chacun formés par gravure de la première couche de couplage 122, et remplissage des espaces gravés par le matériau de la couche intercalaire 131.

Le réseau 123 tel que décrit ici est un réseau insensible à la polarisation, en ce qu'il est adapté à coupler simultanément les deux polarisations du signal centré sur la première longueur d'onde centrale (polarisations considérées au niveau d'une fibre optique disposée au-dessus du réseau). Une première polarisation circule dans le guide d'onde 124-1, l'autre polarisation circule dans le guide d'onde 124-2, les deux guides d'onde 124-1 et 124-2 étant formés dans le même étage de couplage que le réseau 123.

De nombreuses variantes connues d'un réseau de couplage insensible à la polarisation peuvent être mises en œuvre sans sortir du cadre de l'invention.

On peut citer notamment un réseau de couplage insensible à la polarisation, tel que décrit dans la demande de brevet US 2014/0010498. Cette demande de brevet décrit des géométries permettant d'égaliser les taux de transmission respectifs des deux polarisations dans un réseau de couplage insensible à la polarisation. Ces géométries peuvent ou non présenter une périodicité d'ordre deux (périodicité selon deux dimensions de l'espace). En tout état de cause, les géométries présentant une périodicité du premier ordre sont exclues. La demande de brevet décrit par exemple un réseau périodique constitué de motifs élémentaires répartis selon un maillage hexagonal, relié à deux guides d'onde non orthogonaux. La demande de brevet décrit également un réseau non périodique présentant une symétrie planaire, relié à deux guides d'onde non orthogonaux.

On peut également citer un réseau de couplage insensible à la polarisation, constitué de deux réseaux élémentaires périodiques, présentant chacun une périodicité du premier ordre, et gravés dans la même couche dite utile. Chaque réseau élémentaire est dédié à une polarisation. Un premier réseau élémentaire est gravé dans une région supérieure de la couche utile. Un deuxième réseau élémentaire est gravé dans une région inférieure de la couche utile. Tous les motifs des deux réseaux élémentaires sont parallèles entre eux. Une fine épaisseur de la couche utile sépare les deux réseaux élémentaires. Les deuxguides d'onde s'étendent parallèles entre eux, par exemple à partir d'un même côté du réseau de couplage. Ici, la couche utile serait constituée de la première couche de couplage 122. Un tel réseau de couplage est décrit dans l'article de Z. Xiao et al., « Mode Control in Planar Waveguide Grating Couplers With Double Surface Corrugation », IEEE Photonics Technology Letters, Vol. 24, No. 19, pp. 1722-1725, du 1er octobre 2012.

On peut également citer un réseau de couplage insensible à la polarisation, constitué d'un réseau non périodique correspondant à deux réseaux élémentaires uni-périodiques imbriqués, gravés dans une même couche dite utile. Il s'agit en particulier de graver un premier réseau élémentaire dédié à une première polarisation, puis de graver au même endroit un deuxième réseau élémentaire dédié à une seconde polarisation. La couche utile ne subsiste que là où elle est maintenue à la fois dans le premier et dans le deuxième réseaux élémentaires. Ici, la couche utile serait constituée de la première couche de couplage 122. Un tel réseau de couplage est décrit dans l'article de J. H. Song et al., « Polarization-independent non-uniform grating couplers on silicon-on-insulator », Optics Letters, Vol. 40, No. 17, p.3941, du 1er septembre 2015.

La figure 1C illustre, selon une vue de dessus, la deuxième couche de couplage 132.

Cette couche comporte le réseau de couplage 133, configuré pour mettre en œuvre le couplage optique d'un signal centré sur une deuxième longueur d'onde centrale, distincte de la première longueur d'onde centrale.

Le réseau de couplage 133 est ici un réseau de couplage sensible à la polarisation, disposé en entrée/sortie d'un unique guide d'onde 134 intégré sur le substrat, notamment un guide d'onde monomode.

Le réseau de couplage 133 est constitué ici d'une série de motifs répartis avec une périodicité du premier ordre, et selon un pas de répartition Pⱼ. Ainsi, tous les motifs s'étendent sur toute la largeur du réseau, la largeur du réseau pouvant désigner l'une ou l'autre des dimensions du réseau hors épaisseur.

Les motifs sont ici des trous dans la deuxième couche de couplage 132 (remplis par le matériau de la couche d'encapsulation 140).

Les trous présentent ici chacun une section rectangulaire. Cet exemple de forme des trous n'est pas limitatif.

Là encore, le réseau de couplage 133 présente avantageusement une forme rectangulaire ou carrée, ici une forme carrée.

Le guide d'onde 134 s'étend orthogonal à l'un des côtés de ce carré, à mi-hauteur le long de ce côté du carré.

Un adaptateur 135, ou « taper », s'étend entre le réseau de couplage 133 et une extrémité du guide d'onde 134, avec une largeur qui décroit progressivement depuis son côté adjacent au réseau de couplage 133 jusqu'à son côté adjacent au guide d'onde 134.

Le réseau 133, le guide d'onde 134, et l'adaptateur 135 sont chacun formés par gravure de la deuxième couche de couplage 132, et remplissage des espaces gravés par le matériau de la couche d'encapsulation 140.

Le réseau 133 décrit ici est un réseau sensible à la polarisation, en ce qu'il n'est adapté à coupler qu'une seule des deux polarisations d'un signal centré sur la deuxième longueur d'onde centrale, les polarisations de ce signal étant considérées au niveau d'une fibre optique située au-dessus du réseau 133. Cette polarisation circule dans le guide d'onde 134.

De nombreuses variantes connues d'un réseau de couplage sensible à la polarisation peuvent être mises en œuvre sans sortir du cadre de l'invention. Un réseau de couplage sensible à la polarisation présente généralement une périodicité du premier ordre.

En fonctionnement, le dispositif de couplage optique 100 réalise un couplage optique entre une ou plusieurs fibre(s) optique(s) disposées au-dessus de l'empilement de réseaux 123, 133 (de préférence une unique fibre optique), et des circuits photoniques.

Chaque étage de couplage est dédié au couplage optique d'une unique portion de spectre, centrée sur une longueur d'onde centrale prédéterminée.

De préférence, les longueurs d'onde centrales des différents étages de couplage sont toutes distinctes les unes des autres. La longueur d'onde centrale d'un étage de couplage est fixée par exemple par le pas du réseau correspondant.

L'invention couvre également des variantes comprenant trois étages de couplage ou plus. A chaque étage de couplage correspond une couche de couplage dans laquelle sont gravés des renfoncements pour former un réseau de couplage, au moins un guide d'onde, et avantageusement un taper à chaque interface entre le réseau et un guide d'onde.

Chaque étage de couplage comprend un réseau de couplage, l'un au moins, étant insensible à la polarisation.

De préférence, chaque étage de couplage comprenant un réseau insensible à la polarisation est dédié à la réception de signal, c'est-à-dire au transfert d'un signal depuis une fibre optique vers des circuits photoniques.

On peut ainsi réaliser un dispositif de couplage optique multi-spectral, adapté au couplage optique de plusieurs portions de spectre optique.

Ces plusieurs portions de spectre optique peuvent former ensemble une unique bande spectrale, le dispositif formant ainsi un coupleur optique large bande, en particulier un coupleur optique large bande insensible à la polarisation. On atteint notamment une largeur de bande à -1 dB supérieure ou égale à 50 nm, et même supérieure ou égale à 70 nm, ou même supérieure ou égale à 80 nm et même supérieure ou égale à 100 nm, permettant d'atteindre de très hauts débits de transmission de données. Selon ce mode de réalisation, le dispositif selon l'invention comprend au moins deux étages de couplage dans lesquels le réseau est un réseau insensible à la polarisation. De préférence, ces deux étages de couplage sont dédiés chacun à la réception de signal, c'est-à-dire au transfert d'un signal depuis une fibre optique vers des circuits photoniques.

En variante, ces plusieurs portions de spectre optique peuvent être espacées les unes des autres, par exemple pour coupler simultanément une bande spectrale en émission et une bande spectrale en réception.

Dans tout le texte, l'émission se rapporte au sens de circulation de la lumière depuis les circuits photoniques vers une fibre optique au-dessus du dispositif de couplage optique, et la réception se rapport au sens de circulation de la lumière depuis une fibre optique au-dessus du dispositif de couplage optique vers les circuits photoniques.

De préférence, pour au moins un couple de deux étages de couplage, et même pour tous les couples de deux étages de couplage d'un dispositif selon l'invention, la différence entre les maxima de transmission respectifs des deux étages est inférieure à 1 dB.

Les couches de couplage sont séparées deux à deux par des couches intercalaires 121, 131.

Les couches intercalaires 121, 131 présentent chacune un indice optique inférieur à l'indice optique respectif de chaque couche de couplage 122, 132, aux longueurs d'onde centrales de couplage.

On s'intéresse maintenant aux épaisseurs de ces couches intercalaires.

La couche intercalaire intermédiaire 131 présente une épaisseur comprise entre 0,5 µm et 0,6 µm, par exemple 0,56 µm. (Cette épaisseur ne prend pas en compte les espaces gravés de la première couche de couplage 121, remplis par le matériau de la couche intercalaire 131).

Cette épaisseur permet de maximiser la transmission d'un faisceau lumineux à la première longueur d'onde centrale, à travers cette couche intercalaire 131 et jusqu'au premier réseau de couplage 123.

En pratique, on peut déterminer une épaisseur optimale de la couche intercalaire 131, à partir de mesures ou simulations sur un simple empilement d'un substrat, une couche de silice et un étage de couplage à ladite première longueur d'onde centrale. L'étage de couplage reçoit un réseau de couplage et un guide d'onde. On détermine l'évolution du taux de transmission dans le guide d'onde, en fonction de l'épaisseur de la couche de silice. On sélectionne une épaisseur de silice associée à un faible taux de transmission dans le guide d'onde, par exemple un minimum de transmission. Cela correspond à des pertes élevées vers la couche situées sous la silice. Dans le dispositif de couplage optique selon l'invention, la couche située sous la silice reçoit le réseau de couplage 123.

De façon plus générale, l'épaisseur de chaque couche intercalaire est déterminée de façon à maximiser un taux de transmission, à travers cette couche, d'un ou plusieurs faisceaux lumineux, où chaque faisceau lumineux est centré sur la longueur d'onde centrale de l'au moins un réseau de couplage situé sous ladite couche intercalaire.

Dans tout le texte, les termes « dessus » et « sous » se rapportent à un axe vertical, orthogonal au plan du substrat, orienté du substrat vers les étages de couplage.

Le cas échéant, l'épaisseur de la couche intercalaire intermédiaire 131 peut être choisie pour réfléchir en outre un faisceau lumineux à la deuxième longueur d'onde centrale, vers le deuxième étage de couplage. On utilise alors également des mesures ou simulations sur un empilement tel que défini ci-dessus, avec un étage de couplage cette fois à la deuxième longueur d'onde centrale. On choisit une épaisseur correspondant à la fois à un taux de transmission faible pour l'empilement associé à la première longueur d'onde centrale, et à un taux de transmission élevé pour l'empilement associé à la deuxième longueur d'onde centrale.

La couche intercalaire initiale 121 présente une épaisseur comprise entre 0,75 µm et 0,95 µm, par exemple 0,84 µm.

Cette épaisseur permet de maximiser le couplage d'un faisceau lumineux à la première longueur d'onde centrale, dans le premier réseau de couplage 123.

L'épaisseur optimale de la couche intercalaire initiale 121 est notamment une épaisseur permettant de maximiser un taux de réflexion vers les couches supérieures, afin de récupérer le plus de lumière possible dans le premier réseau de couplage 123.

En pratique, on peut déterminer une épaisseur optimale de la couche intercalaire initiale 121, à partir de mesures ou simulations sur un simple empilement d'un substrat, une couche de silice et un étage de couplage à ladite première longueur d'onde centrale, tel que décrit ci-dessus. On sélectionne une épaisseur de silice associée à un taux de transmission élevé dans le guide d'onde, par exemple un maximum de transmission.

De façon plus générale, l'épaisseur de chaque couche intercalaire (initiale ou non) peut être adaptée pour maximiser en outre un taux de couplage dans le réseau de couplage juste au-dessus.

L'épaisseur de la couche intercalaire initiale 121 influence également le taux de couplage dans le réseau 133.

On peut ajuster cette épaisseur de façon à égaliser les taux de couplage dans les réseaux 123 et 133, en utilisant des mesures ou simulations :
- sur un premier empilement tel que défini ci-dessus associé à la première longueur d'onde centrale ; et
- sur un deuxième empilement tel que défini ci-dessus associé à la deuxième longueur d'onde centrale.

On sélectionne pour cela une épaisseur de la couche intercalaire initiale 121 associée à la fois à un taux de transmission élevé dans le guide d'onde du premier empilement, et à un taux de transmission moyen dans le guide d'onde du deuxième empilement. On peut ainsi égaliser des pertes aux deux longueurs d'onde centrales, les unes liées à la traversée de couches supérieures avant d'atteindre le réseau de couplage dédié, les autres liées à la valeur de l'épaisseur de la couche intercalaire initiale 121.

En variante, on peut, à l'aide des mêmes mesures ou simulations, sélectionner une épaisseur de la couche 121 associée à une transmission maximale à la fois à la première et à la deuxième longueurs d'onde centrales.

Les épaisseurs respectives des différentes couches intercalaires offrent donc des paramètres d'ajustement des taux de couplage de chaque portion de spectre dans l'étage de couplage correspondant.

Les épaisseurs optimales sont généralement non négligeables, supérieures ou égales à 300 nm.

Chaque réseau de couplage peut-être apodisé, à la ou aux interface(s) avec le ou les guide(s) d'onde correspondant.

L'apodisation permet de réduire les pertes à l'interface entre un guide d'onde et le réseau de couplage, par une modification progressive de l'agencement des motifs du réseau au fur et à mesure que l'on se rapproche du guide d'onde.

Par exemple, pour un guide d'onde tel qu'illustré en figure 1C, une apodisation du réseau 133 consiste à élargir progressivement les barreaux de silicium au fur et à mesure que l'on se rapproche de l'adaptateur 135, dans une région du réseau située du côté de l'adaptateur 135.

Par abus de langage, dans tout le texte, on considère toujours qu'un réseau est périodique, même lorsque les motifs sont modifiés aux extrémités par une apodisation.

Par exemple, le réseau le plus proche du substrat est apodisé, alors que le réseau le plus éloigné du substrat ne l'est pas. Les pertes liées au couplage entre le réseau et le guide d'onde sont plus élevées sur le réseau sans apodisation, le plus éloigné du substrat. Les pertes liées à la traversée de couches recouvrant le réseau sont plus élevées sur le réseau le plus proche du substrat, avec apodisation. L'apodisation d'un ou plusieurs réseaux permet ainsi d'égaliser des taux de couplage dans les différents étages de couplage.

Le dispositif de couplage optique selon l'invention peut être fabriqué à partir d'un empilement silicium sur isolant (ou SOI pour l'anglais « *Silicon On Insulator* ») comprenant superposés le substrat 110, une couche de dioxyde de silicium formant la première couche intercalaire 121, et une couche de silicium.

Le procédé de fabrication comprend les étapes suivantes :
- gravure de la couche de silicium pour former la première couche de couplage 122, recevant en particulier un réseau et au moins un guide d'onde ;
- dépôt d'une couche d'encapsulation en dioxyde de silicium et planarisation mécano-chimique, puis dépôt ou report sur la couche d'encapsulation d'une couche silicium pouvant être cristallin, polycristallin, ou amorphe, et gravure pour former un réseau et au moins un guide d'onde, cette suite de sous-étapes étant mise en œuvre une ou plusieurs fois en fonction du nombre d'étages de couplage souhaité ; et
- dépôt d'une couche d'encapsulation finale, en dioxyde de silicium.

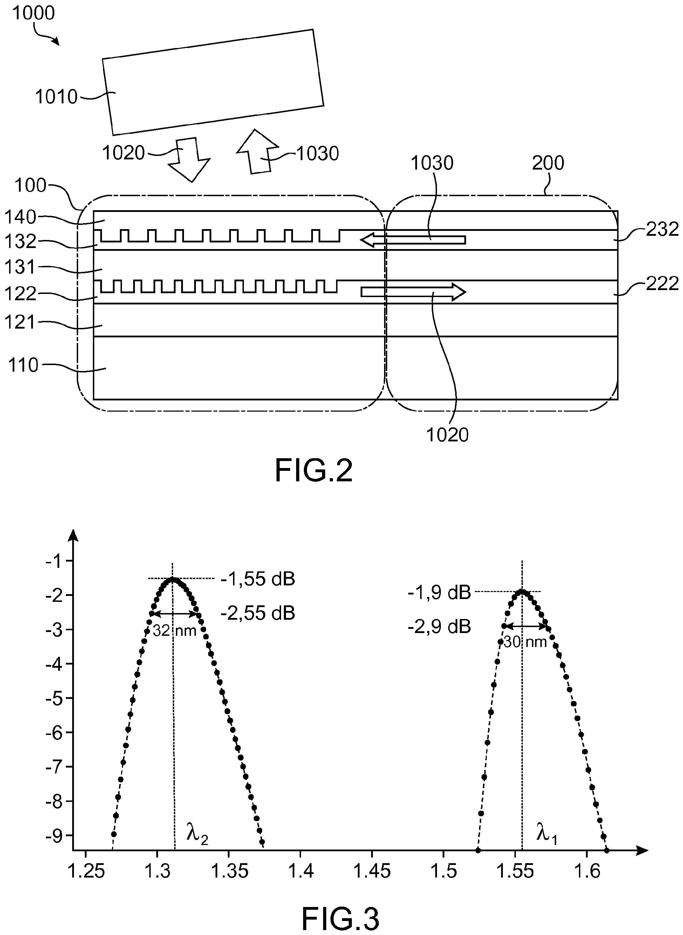

La figure 2 illustre un premier exemple d'un système complet 1000 comprenant un dispositif de couplage optique selon l'invention et des circuits photoniques, intégrés sur un même substrat 110.

Les circuits photoniques sont agencés en une pluralité d'étages de traitement superposés, où chaque étage de traitement s'étend à même hauteur au-dessus du substrat qu'un étage de couplage du dispositif de couplage optique, en entrée ou sortie de cet étage de couplage. Le système est donc agencé en étages superposés, où chaque étage est dédié à une unique longueur d'onde centrale de couplage.

L'agencement des circuits photoniques en étages superposés, avec une unique longueur d'onde centrale traitée à chaque étage, permet que chaque étage soit indépendant des autres.

Dans l'exemple de la figure 2, le dispositif optique de couplage correspond au dispositif 100 illustré aux figures 1A à 1C.

Les circuits photoniques 200 et le dispositif optique de couplage 100 sont fabriqués à partir d'un même SOI, et partagent ensemble un même substrat 110 et une même première couche intercalaire 121.

Le premier étage de couplage 122 du dispositif 100 est disposé en entrée d'un premier étage de traitement 222 des circuits photoniques 200.

Le premier étage de traitement 222 est dédié au traitement des deux polarisations d'un signal 1020 centré sur la première longueur d'onde centrale, ici 1550 nm.

Ce signal 1020 provient d'une fibre optique 1010, qui s'étend sensiblement orthogonale au plan du substrat (inclinée à 8° de la normale à ce plan), au-dessus du dispositif de couplage optique 100.

La fibre optique 1010 n'est pas nécessairement une fibre à maintien de polarisation. Il peut donc se produire, au sein de la fibre optique 1010, des transferts de puissance d'une polarisation à l'autre du signal 1020.

Ces transferts de puissance ne sont pas problématiques, puisque le premier étage de couplage 122 reçoit un réseau de couplage insensible à la polarisation. Il transfère donc les deux polarisations du signal 1020, de la fibre optique 1010 au premier étage de traitement 222. Le pas de réseau est ici de 0,605 µm.

Ces deux polarisations sont traitées en réception par le premier étage de traitement 222, par exemple par des démodulations pour extraire des informations encodées dans le signal 1020.

A l'étage au-dessus, les circuits photoniques 200 comprennent un deuxième étage de traitement 232, dédié au traitement d'un signal centré sur la deuxième longueur d'onde centrale, ici 1310 nm.

Ce signal 1030 peut être généré par une source intégrée dans le deuxième étage de traitement 232, ou transmis au deuxième étage de traitement.

Après traitement, en particulier une modulation du signal pour y intégrer des données à transmettre, le signal 1030 est couplé vers une fibre optique. Ce couplage est réalisé par le deuxième étage de couplage 132, disposé en sortie du deuxième étage de traitement 232. La fibre optique est de préférence la même fibre optique 1010 que celle qui amène le signal 1020. Le pas de réseau dans le deuxième étage de couplage 132 vaut 0,5 µm.

Le deuxième étage de couplage 132 reçoit un réseau de couplage sensible à la polarisation, ce qui n'est pas problématique puisqu'il s'agit cette fois d'un couplage vers la fibre optique 1010, et non à partir de la fibre optique 1010. L'utilisation d'un réseau de couplage sensible à la polarisation permet d'obtenir d'excellentes performances pour le couplage, par exemple moins de 1,8 dB de pertes, et même moins de 1,5 dB, voire même moins de 1 dB.

On voit donc que le dispositif optique de couplage 100 forme ainsi un coupleur optique émetteur-récepteur, permettant de coupler à la fois une portion de spectre en émission, et une portion de spectre en réception. Il permet en particulier que ces deux portions de spectre soient transportées par la même fibre optique 1010.

On remarque que la deuxième couche intercalaire 131, ainsi que la couche d'encapsulation 140, s'étendent à la fois dans le dispositif de couplage optique 100, et dans les circuits photoniques 200.

La figure 3 illustre les performances du dispositif 100 selon l'invention, intégré dans le système 1000 de la figure 2.

L'axe des abscisses correspond à une longueur d'onde, en µm.

L'axe des ordonnées est un taux de transmission de la fibre vers les guides d'onde de chaque étage de couplage, en dB.

Le dispositif 100 présente un premier pic de transmission, centré sur la première longueur d'onde centrale *λ*₁, à environ 1550 nm (ici 1554 nm), et un deuxième pic de transmission, centré sur la deuxième longueur d'onde centrale *λ*₂, à environ 1310 nm (ici 1311 nm).

Le pic centré sur *λ*₁ présente un maximum de transmission de -1,9 dB, et une largeur de bande à -1 dB (soit -1,9-1=-2,9 dB) de 30 nm.

Le pic centré sur *λ*₂ présente un maximum de transmission de -1,55 dB, et une largeur de bande à -1 dB (soit -1,55-1=-2,55 dB) de 32 nm.

Ces performances correspondent à la somme des transmissions d'un coupleur standard dédié à *λ*₁ seule, et d'un coupleur standard dédié à *λ*₂ seule.

Les deux pics de transmission ont donc sensiblement le même maximum, avec moins de 1 dB de différence entre leurs maxima respectifs.

Ils ont également sensiblement la même largeur de bande à -1 dB.

En variante, une longueur d'onde centrale vaut environ 1310 nm, l'autre environ 1490 nm.

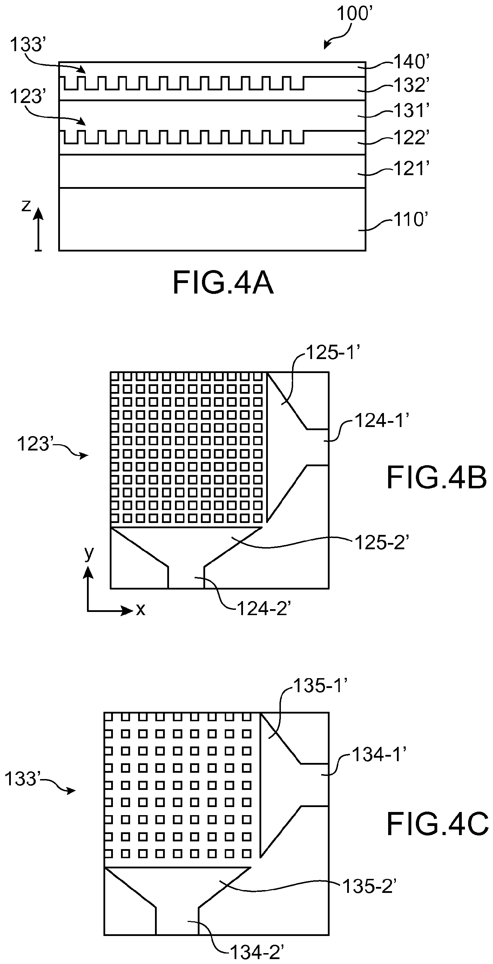

Les figures 4A à 4C illustrent un deuxième mode de réalisation d'un dispositif de couplage optique selon l'invention.

Les références numériques des figures 4A à 4C correspondent à celles des figures 1A à 1C, auxquelles on a ajouté une apostrophe.

Le dispositif de couplage optique 100' ne diffère du dispositif de couplage optique 100 qu'en ce que le deuxième étage de couplage est également insensible à la polarisation.

Il reçoit donc un réseau de couplage insensible à la polarisation 133'. Ce réseau de couplage 133' est disposé en entrée/sortie de deux guides d'onde 134-1', 134-2'. Des adaptateurs respectifs 135-1', 135-2' s'étendent chacun entre le réseau de couplage 133' et un guide d'onde 134-1', respectivement 134-2'.

Les réseaux 123' et 133' sont illustrés ici de façon schématique. La similitude des pas de réseau, relativement aux réseaux illustrés aux figures 1A à 1C, n'est pas forcément représentative de la réalité.

Là-encore, l'épaisseur de la couche intercalaire intermédiaire 131 est adaptée à maximiser la puissance lumineuse reçue par le réseau inférieur 123'. Ici, cette épaisseur est de 920 nm.

Afin de maximiser la largeur de bande à -1 dB d'un tel dispositif optique de couplage, il est important que les transmissions maximales des différents étages de couplage soient proches les unes des autres. On a détaillé ci-avant différents moyens pour égaliser ces transmissions maximales, par exemple l'apodisation du réseau inférieur 123' seulement.

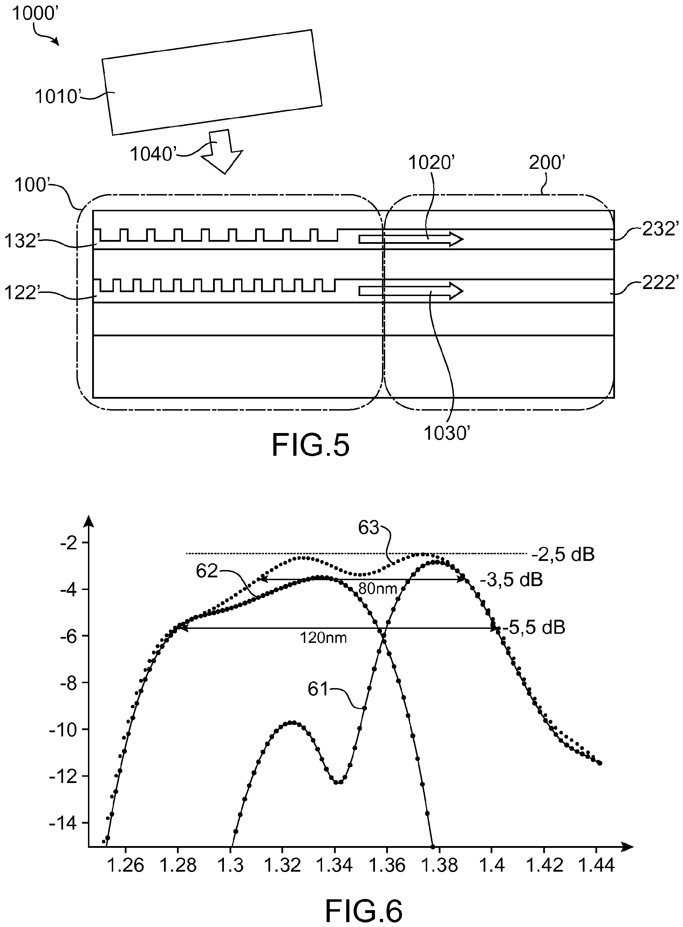

La figure 5 illustre un deuxième exemple d'un système complet 1000', comprenant un dispositif de couplage optique 100' et des circuits photoniques intégrés sur un même substrat 110'.

Le système 1000' ne sera décrit que pour ses différences relativement au système 1000 de la figure 2.

Le système 1000' fonctionne ici uniquement en réception.

La fibre optique 1010' amène vers le dispositif optique de couplage 100' un signal large bande 1040'.

Chaque étage de couplage du dispositif 100' réalise le couplage d'une portion de spectre donnée du signal large bande 1040', vers des circuits de traitement dédiés.

En particulier, le premier étage de couplage 122' réalise le couplage optique entre la fibre optique 1010' et un premier étage de traitement 222', d'un signal 1020' centré sur la première longueur d'onde centrale, ici 1380 nm.

De la même façon, le deuxième étage de couplage 132' réalise le couplage optique entre la fibre optique 1010' et un deuxième étage de traitement 232', d'un signal 1030' centré sur la deuxième longueur d'onde centrale, ici 1320 nm.

Les signaux 1020' et 1030' forment ensemble le signal large bande 1040'.

Le premier étage de traitement 222' est dédié au traitement des deux polarisations du signal 1020' (par exemple des démodulations pour extraire des informations encodées dans le signal 1020').

Le deuxième étage de traitement 232' est dédié au traitement des deux polarisations du signal 1030' (par exemple des démodulations pour extraire des informations encodées dans le signal 1030').

On voit donc que le dispositif optique de couplage 100' forme ainsi un coupleur optique large bande insensible à la polarisation, permettant de coupler les différentes portions de spectre d'un signal large bande. Le dispositif de couplage optique 100' présente une bande passante à -1 dB supérieure ou égale à 50 nm, et même supérieure ou égale à 70 nm, voire même supérieure ou égale à 80 nm (largeur à la valeur maximale de la transmission, moins 1 dB).

Selon une variante non représentée, le dispositif de couplage optique peut comprendre également deux autres étages de couplage, sensibles à la polarisation. Les deux étages insensibles à la polarisation sont dédiés à la réception d'un signal provenant d'une première fibre optique. Les deux étages sensibles à la polarisation sont dédiés à l'émission d'un signal vers une seconde fibre optique. La première et la seconde fibre optique sont avantageusement distinctes l'une de l'autre. Lorsque l'émission et la réception se font à des longueurs d'onde différentes, on peut utiliser une seule et même fibre optique à la place de la première et la seconde fibre optique.

La figure 6 illustre les performances d'un dispositif du type du dispositif 100' selon l'invention, intégré dans le système 1000' de la figure 5.

Afin de limiter les ressources nécessaires à la simulation illustrée en figure 6, on a simulé les performances d'un dispositif du type du dispositif 100', mais dans lequel chaque étage de couplage reçoit un réseau uni-périodique, donc sensible à la polarisation. Les résultats illustrés en figure 6 fournissent cependant une bonne illustration de principe des performances d'un dispositif selon l'invention.

L'axe des abscisses correspond à une longueur d'onde, en µm.

L'axe des ordonnées est un taux de transmission de la fibre vers les guides d'onde de chaque étage de couplage, en dB.

Le premier étage de couplage présente une transmission illustrée par le graphe 61, centré sur environ 1380 nm.

Le deuxième étage de couplage présente une transmission illustrée par le graphe 62, centré sur environ 1320 nm.

Les deux étages de couplage présentent sensiblement le même maximum de transmission (-3,5 dB, respectivement -3 dB).

Le dispositif comprenant ces deux étages de couplage présente ainsi une transmission illustrée par le graphe 63, avec un maximum de transmission de -2,5 dB, une largeur de bande à -1 dB (soit -2,5-1=-3,5 dB) de 80 nm, et une largeur de bande à -3 dB (soit -2,5-3=-5,5 dB) de 120 nm.

L'invention concerne également un procédé d'utilisation d'un dispositif de couplage optique selon l'invention, pour réaliser un couplage large bande insensible à la polarisation (largeur de bande à -1 dB supérieure ou égale à 50 nm, et même supérieure ou égale à 80 nm) ou pour réaliser un couplage en émission et réception avec une même fibre optique.

De nombreuses variantes peuvent être apportées sans sortir du cadre de l'invention. Par exemple, une couche réfléchissante métallique ou un miroir de Bragg peut s'étendre entre les étages de couplage et le substrat.

On peut également intervertir la position des étages de couplage les uns au-dessus des autres. En particulier, on peut intervertir la position d'étages de couplage dimensionnés pour fonctionner chacun à des longueurs d'onde respectives différentes.

## Revendications

1. Dispositif de couplage optique (100 ; 100'), destiné à réaliser un couplage optique à au moins deux longueurs d'onde centrales entre une fibre optique (1010 ; 1010') et des circuits photoniques (200 ; 200'), **caractérisé en ce qu'**il comprend un substrat (110 ; 110') et au moins deux étages de couplage (122, 132 ; 122', 132') intégrés sur ledit substrat, et **en ce que** :
- chaque étage de couplage (122, 132 ; 122', 132') comprend, intégrés sur le substrat, un réseau de couplage (123, 133 ; 123', 133') et au moins un guide d'onde (124-1, 124-2, 134 ; 124-1', 124-2', 134-1', 134-2'), le réseau de couplage étant disposé en entrée ou en sortie de l'au moins un guide d'onde et configuré pour mettre en œuvre un couplage optique centré sur une longueur d'onde centrale respective (*λ*₁ ; *λ*₂ ) ;
- les plusieurs réseaux de couplage (123, 133 ; 123', 133') sont superposés les uns au-dessus des autres, selon un axe orthogonal au plan du substrat (110 ; 110') ; **caractérisé en ce qu'**un au moins des réseaux de couplage (123 ; 123', 133') est un réseau de couplage insensible à la polarisation.

2. Dispositif (100 ; 100') selon la revendication 1, **caractérisé en ce qu'**il comprend en outre une couche intercalaire dite initiale (121; 121') et/ou au moins une couche intercalaire dite intermédiaire (131; 131'), la couche intercalaire initiale (121; 121') s'étendant entre le substrat (110 ; 110') et un étage de couplage directement voisin (122 ; 122'), et chaque couche intercalaire intermédiaire (131 ; 131') s'étendant entre deux étages de couplage (122, 132 ; 122', 132').

3. Dispositif (100 ; 100') selon la revendication 2, **caractérisé en ce que** chaque couche intercalaire (121, 131 ; 121', 131') présente une épaisseur supérieure à 300 nm.

4. Dispositif (100 ; 100') selon la revendication 2 ou 3, **caractérisé en ce que** chaque couche intercalaire (121, 131; 121', 131') est en silice.

5. Dispositif (100 ; 100') selon l'une quelconque des revendications 1 à 4, **caractérisé en ce que** l'étage de couplage (121 ; 121') le plus proche du substrat présente un réseau de couplage apodisé, et **en ce que** l'étage de couplage (131 ; 131') le plus éloigné du substrat présente un réseau de couplage non apodisé.

6. Dispositif (100 ; 100') selon l'une quelconque des revendications 1 à 5, **caractérisé en ce que** chaque étage de couplage (122 ; 132 ; 122', 132') est associé à un maximum respectif du taux de transmission du couplage optique mis en œuvre par le réseau de couplage correspondant (132, 133 ; 123', 133'), et **en ce que** pour au moins un couple de deux étages de couplage, la différence entre les maxima respectifs correspondant est inférieure à 1 dB.

7. Dispositif (100') selon l'une quelconque des revendications 1 à 6, **caractérisé en ce qu'**il comprend deux étages de couplage parmi lesquels :
- un premier étage de couplage (122'), recevant un premier réseau de couplage (123') insensible à la polarisation, associé à une première longueur d'onde centrale (*λ*₁) et à un premier maximum du taux de transmission du couplage optique mis en œuvre par ledit réseau de couplage (123') ; et
- un deuxième étage de couplage (132'), recevant un deuxième réseau de couplage (133') insensible à la polarisation, associé à une deuxième longueur d'onde centrale (*λ*₂) et à un deuxième maximum du taux de transmission du couplage optique mis en œuvre par ledit réseau de couplage (133') ;
la différence entre la première et la deuxième longueurs d'onde centrales étant inférieure ou égale à 100 nm, et la différence entre le premier et le deuxième maximum du taux de transmission étant inférieure ou égale à 1 dB, le dispositif de couplage optique (100') formant ainsi un coupleur large bande insensible à la polarisation avec une bande passante à -1 dB supérieure ou égale à 50 nm.

8. Dispositif (100) selon l'une quelconque des revendications 1 à 6, **caractérisé en ce qu'**il comprend deux étages de couplage parmi lesquels :
- un premier étage de couplage (122), recevant un premier réseau de couplage insensible à la polarisation (123), et associé à une première longueur d'onde centrale (*λ*₁) ; et
- un deuxième étage de couplage (132), recevant un deuxième réseau de couplage (133) sensible à la polarisation, et associé à une deuxième longueur d'onde centrale (*λ*₂) ;
la différence entre la première et la deuxième longueurs d'onde centrales étant supérieure ou égale à 130 nm.

9. Dispositif (100) selon la revendication 8, **caractérisé en ce que** la première longueur d'onde centrale (*λ*₁) est comprise entre 1540 et 1560 nm, et **en ce que** la deuxième longueur d'onde centrale (*λ*₂) est comprise entre 1300 et 1320 nm.

10. Dispositif (100 ; 100') selon l'une quelconque des revendications 1 à 9, **caractérisé en ce que** le nombre d'étages de couplage (122, 132 ; 122', 132') est égal à deux.

11. Système optique (1000 ; 1000') comprenant, intégrés sur un même substrat (110 ; 110'), un dispositif de couplage optique (100 ; 100') selon l'une quelconque des revendications 1 à 10 et des circuits photoniques (200 ; 200'), **caractérisé en ce que** les circuits photoniques (200 ; 200') sont agencés en une pluralité d'étages de traitement superposés (222, 232 ; 222', 232'), et **en ce qu'**à chaque étage de couplage (122, 132 ; 122', 132') du dispositif de couplage optique correspond un étage de traitement (222, 232 ; 222', 232').

12. Système (1000') selon la revendication 11, **caractérisé en ce que** le dispositif de couplage optique est un dispositif (100') selon la revendication 7, et **en ce que** :
- le premier étage de couplage (122') est disposé en entrée d'un premier étage de traitement (222'), configuré pour le traitement d'un signal centré sur la première longueur d'onde centrale et reçu par le système (1000') par l'intermédiaire du dispositif de couplage optique (100') ; et
- le deuxième étage de couplage (132') est disposé en entrée d'un deuxième étage de traitement (232'), configuré pour le traitement d'un signal centré sur la deuxième longueur d'onde centrale et reçu par le système (1000') par l'intermédiaire du dispositif de couplage optique (100').

13. Système (1000') selon la revendication 12, **caractérisé en ce qu'**il comprend en outre une unique fibre d'émission et réception (1010'), configurée pour transmettre aux circuits photoniques (200'), par l'intermédiaire du dispositif de couplage optique (100'), un signal large bande formé par le signal centré sur la première longueur d'onde centrale et le signal centré sur la deuxième longueur d'onde centrale.

14. Système (1000) selon la revendication 11, **caractérisé en ce que** le dispositif de couplage optique est un dispositif (100) selon la revendication 8 ou 9, **en ce que** :
- le premier étage de couplage (122) est disposé en entrée d'un premier étage de traitement (222), configuré pour le traitement d'un signal centré sur la première longueur d'onde centrale et reçu par le système (1000) par l'intermédiaire du dispositif de couplage optique (100) ; et
- le deuxième étage de couplage (132) est disposé en sortie d'un deuxième étage de traitement (232), configuré pour le traitement d'un signal centré sur la deuxième longueur d'onde centrale et destiné à être émis par le système (1000) par l'intermédiaire du dispositif de couplage optique (100).

15. Système (1000) selon la revendication 14, **caractérisé en ce qu'**il comprend en outre une unique fibre d'émission et réception (1010), configurée :
- pour transmettre au premier étage de traitement (222), par l'intermédiaire du dispositif de couplage optique (100), le signal centré sur la première longueur d'onde centrale ; et
- pour recevoir du deuxième étage de traitement (232), par l'intermédiaire du dispositif de couplage optique (100), le signal centré sur la deuxième longueur d'onde centrale.

## Patentansprüche

1. Optische Kopplungsvorrichtung (100; 100'), die dazu bestimmt ist, eine optische Kopplung bei mindestens zwei zentralen Wellenlängen zwischen einer optischen Faser (1010; 1010') und photonischen Schaltungen (200; 200') durchzuführen, **dadurch gekennzeichnet, dass** sie ein Substrat (110; 110') und mindestens zwei Kopplungsstufen (122, 132; 122', 132') enthält, die auf dem Substrat integriert sind, und dass:
- jede Kopplungsstufe (122, 132; 122', 132') ein Kopplungsgitter (123, 133; 123', 133') und mindestens einen Wellenleiter (124-1, 124-2, 134; 124-1', 124-2', 134-1', 134-2') umfasst, welche auf dem Substrat integriert sind, wobei das Kopplungsgitter am Eingang oder Ausgang des mindestens einen Wellenleiters angeordnet und dazu ausgelegt ist, um eine optische Kopplung zu implementieren, die auf eine jeweilige zentrale Wellenlänge ( 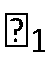 ; 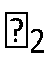 ) zentriert ist;
- die mehreren Kopplungsgitter (123, 133; 123', 133') entlang einer zur Ebene des Substrats (110; 110') orthogonal verlaufenden Achse übereinander angeordnet sind;
**dadurch gekennzeichnet, dass** mindestens eines der Kopplungsgitter (123; 123', 133') ein polarisationsunempfindliches Kopplungsgitter ist.

2. Vorrichtung (100; 100') nach Anspruch 1, **dadurch gekennzeichnet, dass** sie ferner eine sogenannte anfängliche Zwischenschicht (121; 121') und/oder mindestens eine sogenannte zwischenliegende Zwischenschicht (131; 131') aufweist, wobei sich die anfängliche Zwischenschicht (121; 121') zwischen dem Substrat (110; 110') und einer direkt benachbarten Kopplungsstufe (122; 122') erstreckt und jede zwischenliegende Zwischenschicht (131; 131') sich zwischen zwei Kopplungsstufen (122, 132; 122', 132') erstreckt.

3. Vorrichtung (100; 100') nach Anspruch 2, **dadurch gekennzeichnet, dass** jede Zwischenschicht (121, 131; 121', 131') eine Dicke von mehr als 300 nm aufweist.

4. Vorrichtung (100; 100') nach Anspruch 2 oder 3, **dadurch gekennzeichnet, dass** jede Zwischenschicht (121, 131; 121', 131') aus Kieselsäure besteht.

5. Vorrichtung (100; 100') nach einem der Ansprüche 1 bis 4, **dadurch gekennzeichnet, dass** die dem Substrat am nächsten liegende Kopplungsstufe (121; 121') ein apodisiertes Kopplungsgitter aufweist, und dass die am weitesten vom Substrat entfernte Kopplungsstufe (131; 131') ein nicht apodisiertes Kopplungsgitter aufweist.

6. Vorrichtung (100; 100') nach einem der Ansprüche 1 bis 5, **dadurch gekennzeichnet, dass** jeder Kopplungsstufe (122; 132; 122', 132') jeweils einem Maximum der Übertragungsrate der optischen Kopplung zugeordnet ist, die durch das entsprechende Kopplungsgitter (132, 133; 123', 133') implementiert wird, und dass für mindestens ein Paar von zwei Kopplungsstufen die Differenz zwischen den jeweils entsprechenden Maxima kleiner als 1 dB ist.

7. Vorrichtung (100') nach einem der Ansprüche 1 bis 6, **dadurch gekennzeichnet, dass** sie zwei Kopplungsstufen umfasst, darunter:
- eine erste Kopplungsstufe (122'), die ein erstes polarisationsunempfindliches Kopplungsgitter (123') aufnimmt, und die einer ersten zentralen Wellenlänge (λ₁) und einem ersten Maximum der Übertragungsrate der durch das Kopplungsgitter (123') implementierten optischen Kopplung zugeordnet ist; und
- eine zweite Kopplungsstufe (132'), die ein zweites polarisationsunempfindliches Kopplungsgitter (133') aufnimmt, und die einer zweiten zentralen Wellenlänge (λ₂) und einem zweiten Maximum der Übertragungsrate der durch das Kopplungsgitter (133') implementierten optischen Kopplung zugeordnet ist;
wobei die Differenz zwischen der ersten und der zweiten zentralen Wellenlänge kleiner oder gleich 100 nm ist und die Differenz zwischen dem ersten und dem zweiten Maximum der Übertragungsrate kleiner oder gleich 1dB ist, wobei die optische Kopplungsvorrichtung (100') somit einen polarisationsunempfindlichen Breitbandkoppler bildet mit einer Bandbreite bei -1 dB größer oder gleich 50 nm.

8. Vorrichtung (100) nach einem der Ansprüche 1 bis 6, **dadurch gekennzeichnet, dass** sie zwei Kopplungsstufen umfasst, darunter:
- eine erste Kopplungsstufe (122), die ein erstes polarisationsunempfindliches Kopplungsgitter (123) aufnimmt und einer ersten zentralen Wellenlänge (λ₁) zugeordnet ist; und
- eine zweite Kopplungsstufe (132), die ein zweites polarisationsempfindliches Kopplungsgitter (133) aufnimmt und einer zweiten zentralen Wellenlänge (λ₂) zugeordnet ist;
wobei die Differenz zwischen der ersten und der zweiten zentralen Wellenlänge größer oder gleich 130 nm ist.

9. Vorrichtung (100) nach Anspruch 8, **dadurch gekennzeichnet, dass** die erste zentrale Wellenlänge (λ₁) zwischen 1540 und 1560 nm liegt, und dass die zweite zentrale Wellenlänge (λ₂) zwischen 1300 und 1320 nm liegt

10. Vorrichtung (100; 100') nach einem der Ansprüche 1 bis 9, **dadurch gekennzeichnet, dass** die Anzahl der Kopplungsstufen (122, 132; 122', 132') gleich zwei ist.

11. Optisches System (1000; 1000'), das auf einem gleichen Substrat (110; 110') integriert eine optische Kopplungsvorrichtung (100; 100') nach einem der Ansprüche 1 bis 10 und photonische Schaltungen (200; 200') enthält, **dadurch gekennzeichnet, dass** die photonischen Schaltungen (200; 200') in mehreren übereinanderliegenden Verarbeitungsstufen (222, 232; 222', 232') angeordnet sind, und dass jeder Kopplungsstufe (122, 132; 122', 132') der optischen Kopplungsvorrichtung eine Verarbeitungsstufe (222, 232; 222', 232') zuordnet ist.

12. System (1000') nach Anspruch 11, **dadurch gekennzeichnet, dass** die optische Kopplungsvorrichtung eine Vorrichtung (100') nach Anspruch 7 ist, und dass:
- die erste Kopplungsstufe (122') am Eingang einer ersten Verarbeitungsstufe (222') angeordnet ist, die für die Verarbeitung eines Signals ausgelegt ist, das auf die erste zentrale Wellenlänge zentriert ist und von dem System (1000') über die optische Kopplungsvorrichtung (100') empfangen wird; und
- die zweite Kopplungsstufe (132') am Eingang einer zweiten Verarbeitungsstufe (232') angeordnet ist, die für die Verarbeitung eines Signals ausgelegt ist, das auf die zweite zentrale Wellenlänge zentriert ist und von dem System (1000') über die optische Kopplungsvorrichtung (100') empfangen wird.

13. System (1000') nach Anspruch 12, **dadurch gekennzeichnet, dass** es ferner eine einzige Sende- und Empfangsfaser (1010') umfasst, die dazu ausgelegt ist, über die optische Kopplungsvorrichtung (100') ein Breitbandsignal an die photonischen Schaltungen (200') zu übertragen, das aus dem auf die erste zentrale Wellenlänge zentrierten Signal und dem auf die zweite zentrale Wellenlänge zentrierten Signal gebildet wird.

14. System (1000) nach Anspruch 11, **dadurch gekennzeichnet, dass** die optische Kopplungsvorrichtung eine Vorrichtung (100) nach Anspruch 8 oder 9 ist, und dass:
- die erste Kopplungsstufe (122) am Eingang einer ersten Verarbeitungsstufe (222) angeordnet ist, die für die Verarbeitung eines Signals ausgelegt ist, das auf die erste zentrale Wellenlänge zentriert ist und von dem System (1000) über die optische Kopplungsvorrichtung (100) empfangen wird; und
- die zweite Kopplungsstufe (132) am Ausgang einer zweiten Verarbeitungsstufe (232) angeordnet ist, die für die Verarbeitung eines Signals ausgelegt ist, das auf die zweite zentrale Wellenlänge zentriert ist und von dem System (1000) über die optische Kopplungsvorrichtung (100) emittiert werden soll.

15. System (1000) nach Anspruch 14, **dadurch gekennzeichnet, dass** es ferner eine einzige Sende- und Empfangsfaser (1010) enthält, die dazu ausgelegt ist:
- zur ersten Verarbeitungsstufe (222) über die optische Kopplungsvorrichtung (100) das auf die erste zentrale Wellenlänge zentrierte Signal zu übertragen; und
- von der zweiten Verarbeitungsstufe (232) über die optische Kopplungsvorrichtung (100) das auf die zweite zentrale Wellenlänge zentrierte Signal zu empfangen.

## Claims

1. An optical coupling device (100; 100'), for performing an optical coupling at at least two central wavelengths between an optical fibre (1010; 1010') and photonic circuits (200; 200'), **characterised in that** it comprises a substrate (110; 110') and at least two coupling stages (122, 132; 122', 132') integrated onto said substrate, and **in that**:
- each coupling stage (122, 132; 122', 132') comprises, integrated onto the substrate, a grating coupler (123, 133; 123', 133') and at least one waveguide (124-1, 124-2, 134; 124-1', 124-2', 134-1', 134-2'), the grating coupler being disposed at the input or output of the at least one waveguide and configured to implement an optical coupling centred on a respective central wavelength (λ₁; λ₂);
- the several grating couplers (123, 133; 123', 133') are superimposed on each other, along an axis orthogonal to the plane of the substrate (110; 110');
**characterised in that** at least one of the grating couplers (123; 123', 133') is a grating coupler insensitive to polarisation.

2. The device (100; 100') according to claim 1, **characterised in that** it further comprises a so-called initial interlayer (121; 121') and/or at least one so-called intermediate interlayer (131; 131'), the initial interlayer (121; 121') extending between the substrate (110; 110') and an immediately neighbouring coupling stage (122; 122'), and each intermediate interlayer (131; 131') extending between two coupling stages (122, 132; 122', 132').

3. The device (100; 100') according to claim 2, **characterised in that** each interlayer (121, 131; 121', 131') has a thickness greater than 300nm.

4. The device (100; 100') according to claim 2 or 3, **characterised in that** each interlayer (121, 131; 121', 131') is of silica.

5. The device (100; 100') according to any of claims 1 to 4, **characterised in that** the coupling stage (121; 121') situated the closest to the substrate has an apodised grating coupler, and **in that** the coupling stage (131; 131') situated the furthest from the substrate has a non-apodised grating coupler.

6. The device (100; 100') according to any of claims 1 to 5, **characterised in that** each coupling stage (122; 132; 122', 132') is associated with a respective maximum of the transmission rate of the optical coupling implemented by the corresponding grating coupler (132, 133; 123', 133'), and **in that** for at least one couple of two coupling stages, the difference between the corresponding respective maxima is lower than 1dB.

7. The device (100') according to any of claims 1 to 6, **characterised in that** it comprises two coupling stages among which:
- a first coupling stage (122'), comprising a first grating coupler (123') insensitive to polarisation, associated with a first central wavelength (λ₁) and with a first maximum of the transmission rate of the optical coupling implemented by said grating coupler (123'); and
- a second coupling stage (132'), comprising a second grating coupler (133') insensitive to polarisation, associated with a second central wavelength (λ₂) and with a second maximum of the transmission rate of the optical coupling implemented by said grating coupler (133');
the difference between the first and second central wavelengths being lower than or equal to 100nm, and the difference between the first and second maxima of the transmission rate being lower than or equal to 1dB, the optical coupling device (100') thus forming a wide band coupler insensitive to polarisation with a bandwidth at -1 dB that is greater than or equal to 50 nm.

8. The device (100) according to any of claims 1 to 6, **characterised in that** it comprises two coupling stages among which:
- a first coupling stage (122) comprising a first grating coupler insensitive to polarisation (123), and associated with a first central wavelength (*λ*₁); and
- a second coupling stage (132) comprising a second grating coupler (133) sensitive to polarisation, and associated with a second central wavelength (*λ*₂);
the difference between the first and second central wavelengths being greater than or equal to 130nm.

9. The device (100) according to claim 8, **characterised in that** the first central wavelength (λ₁) is between 1540 and 1560nm, and **in that** the second central wavelength (λ₂) is between 1300 and 1320nm.

10. The device (100; 100') according to any of claims 1 to 9, **characterised in that** the number of coupling stages (122, 132; 122', 132') is equal to two.

11. An optical system (1000; 1000') comprising, integrated on a same substrate (110; 110'), an optical coupling device (100; 100') according to any of claims 1 to 10 and photonic circuits (200; 200'), **characterised in that** the photonic circuits (200; 200') are arranged into a plurality of superimposed processing stages (222, 232; 222', 232'), and **in that** to each coupling stage (122, 132; 122', 132') of the optical coupling device corresponds a processing stage (222, 232; 222', 232').

12. The system (1000') according to claim 11, **characterised in that** the optical coupling device is a device (100') according to claim 7, and **in that**:
- the first coupling stage (122') is disposed at the input of a first processing stage (222'), configured to process a signal centred on the first central wavelength and received by the system (1000') through the optical coupling device (100'); and
- the second coupling stage (132') is disposed at the input of a second processing stage (232'), configured to process a signal centred on the second central wavelength and received by the system (1000') through the optical coupling device (100').

13. The system (1000') according to claim 12, **characterised in that** it further comprises a single emitting and receiving fibre (1010'), configured to transmit to the photonic circuits (200'), through the optical coupling device (100'), a broadband signal formed by the signal centred on the first central wavelength and the signal centred on the second central wavelength.

14. The system (1000) according to claim 11, **characterised in that** the optical coupling device is a device (100) according to claim 8 or 9, **in that**:
- the first coupling stage (122) is disposed at the input of a first processing stage (222), configured to process a signal centred on the first central wavelength and received by the system (1000) through the optical coupling device (100); and
- the second coupling stage (132) is disposed at the output of a second processing stage (232), configured to process a signal centred on the second central wavelength and intended to be emitted by the system (1000) through the optical coupling device (100).

15. The system (1000) according to claim 14, **characterised in that** it further comprises a single emitting and receiving fibre (1010), configured:
- to transmit to the first processing stage (222), through the optical coupling device (100), the signal centred on the first central wavelength; and
- to receive from the second processing stage (232), through the optical coupling device (100), the signal centred on the second central wavelength.
